# EUROPÄISCHE PATENTSCHRIFT

(11) **EP 1 808 632 B1**
(45) Veröffentlichungstag und Bekanntmachung des Hinweises auf die Patenterteilung: **31.12.2008**
(21) Anmeldenummer: 06021686.8
(22) Anmeldetag: 17.10.2006
(51) Int. Cl.: F16L 9/06, F16L 51/02

(54) **Leitungselement für Heizungsanlagen**
Pipe element for heating systems
Elément de conduite pour des systèmes de chauffage

(30) Priorität: 08.11.2005 DE 102005053525
(43) Veröffentlichungstag der Anmeldung: 18.07.2007
(73) Patentinhaber: Witzenmann GmbH, 75175 Pforzheim (DE)
(72) Erfinder: Badouin, Andreas, 76332 Bad Herrenalb (DE); Foitzik, Peter, 75242 Neuhausen-Schellbronn (DE); Gehring, Matthias, 75334 Straubenhardt (DE); Merkowski, Eduard, 75181 Pforzheim (DE); Picard, Frank, 63110 Rodgau (DE)
(74) Vertreter: Blumenröhr, Dietrich

(56) Entgegenhaltungen:
- DE-A1- 10 320 937
- DE-A1- 19 531 245
- US-A- 2 864 591

## Beschreibung

Die Erfindung betrifft ein Leitungselement für Heizungsanlagen, das zumindest aus einem glattwandigen Leitungsabschnitt und einem weiteren zumindest teilweise gebogenen Leitungsabschnitt mit sich ändernder Axialerstreckungsrichtung besteht. Die DE 103 20 937 A zeigt ein Leitungselement nach dem Oberbegriff von Anspruch 1.

Derzeit erfolgt die Verrohrung in Gasthermen und in sonstigen Komponenten von Heizungsanlagen mittels Kupferrohren, unabhängig davon, ob der Heizwasservorlauf, der Heizwasserrücklauf, der Trinkwasservorlauf, der Trinkwasserrücklauf oder die Brennstoff-, insbesondere Gasleitungen betroffen sind. Der Anschluss dieser Verrohrung an benachbarte Leitungselemente erfolgt entweder über Steckverbindungen (insbesondere im Falle von Anschlüssen innerhalb von herstellerseitig montierten Geräten) oder mittels Schraubverbindungen (insbesondere im Falle von Anschlüssen, die vor Ort durch den Sanitärinstallateur hergestellt werden müssen). Die Leitungen sind dabei oft in verschiedenste Richtungen abgebogen, um die Leitungen an die jeweiligen Einbauverhältnisse innerhalb einer Heizungsanlage anzupassen. Dadurch kommt es zu einer außerordentlich hohen Variantenvielfalt, da für unterschiedliche Leitungslängen und unterschiedliche Abwinklungen jeweils ein separater Leitungstyp zur Verfügung gestellt werden muss.

Hinzu kommt noch das Problem, dass insbesondere die Qualität der Steckverbindungen erheblich beeinträchtigt wird, wenn auf sie seitliche Spannungen einwirken, also Kräfte in Radialrichtung der Leitung; dies führt zumindest zu Dichtigkeitsproblemen und oft auch zu einer Zerstörung der für solche Steckverbindungen oft verwendeten Kunststoffanschlussteile. Oft sind aber solche Spannungen in Radialrichtung wegen der beengten Einbauverhältnisse in Heizungsanlagen und auch wegen Montageungenauigkeiten nicht zu vermeiden. Dennoch wird versucht, solche radialen Spannungen dadurch von den Leitungselementen fernzuhalten, dass diese gleich zu Beginn des Zusammenbaus der Komponenten der Heizungsanlage eingebaut werden und dass selbst schlechter zugängliche Komponenten und die gesamten Verdrahtung erst nachträglich um das jeweilige Leitungselement herum montiert werden. Dies erschwert natürlich den Zusammenbau solcher Heizungsanlagen in beträchtlichem Maße.

Hiervon ausgehend liegt der vorliegenden Erfindung die Aufgabe zugrunde, ein Leitungselement der eingangs genannten Art zur Verfügung zu stellen, das sich durch eine einfachere Montierbarkeit und eine größere Belastbarkeit, insbesondere im Hinblick auf Kräfte auszeichnet, die auf das Leitungselement einwirken.

Diese Aufgabe wird erfindungsgemäß dadurch gelöst, dass der weitere Leitungsabschnitt gewellt ausgebildet ist, dass der lichte Außendurchmesser des weiteren Leitungsabschnitts im Wesentlichen dem Außendurchmesser des glattwandigen Leitungsabschnitts entspricht, dass das Leitungselement einen gewellten Übergangsbereich zwischen dem glattwandigen Leitungsabschnitt mit einem ersten Durchmesser und dem weiteren Leitungsabschnitt mit einem dem gegenüber kleineren zweiten lichten Innendurchmesser aufweist, und dass die radial innen liegenden Wellentäler im Übergangsbereich auf einer in etwa trichterförmigen Mantelfläche liegen.

Diese konstruktiven Merkmale haben insbesondere folgende vorteilhafte Effekte: Die Wellung des weiteren Leitungsabschnitts führt zu einer Nachgiebigkeit des gesamten Leitungselementes in vor allem Axial- und Radialrichtung; dadurch können radiale Spannungen ebenso abgefangen werden, wie das Leitungselement beim Montieren an den bereits montierten weiteren Komponenten der Heizungsanlage vorbei in die richtige Einbauposition gebogen werden kann; durch die Biegbarkeit des Leitungselements lassen sich darüber hinaus unterschiedliche Einbausituationen mit dem selben Leitungselement erfüllen, sodass dadurch eine deutliche Reduzierung der erforderlichen Variantenvielfalt möglich ist. Ein besonderer Vorteil liegt dabei darin, dass das Leitungselement von Hand, also insbesondere ohne zusätzliche Werkzeuge, gebogen und in die gewünschte Erstreckungsrichtung gebracht werden kann.

Indem der Außendurchmesser entlang des gesamten Leitungselements im Wesentlichen gleich bleibt, kann das Einbauvolumen entsprechend klein gehalten werden, sodass hierdurch keinerlei Nachteile durch Verwendung eines erfindungsgemäßen teilgewellten Leitungselements auftreten. Während üblicherweise teilgewellte Leitungen dadurch hergestellt werden, dass die Wellen ausgehend vom Außendurchmesser des glattwandigen Leitungsabschnitts in Radialrichtung nach Außen vorstehen, würde bei diesen herkömmlichen teilgewellten Leitungen, die durchaus von anderen Einsatzgebieten bekannt sind, der Einbauraum entsprechend vergrößert, was wegen der eingangs erwähnten beengten Einbauverhältnisse bei Heizungsanlagen nicht akzeptiert wird.

Das Besondere des erfindungsgemäßen teilgewellten Leitungselements besteht vor allem in dem gewellten Übergangsbereich mit innerer in etwa trichterförmiger Mantelfläche, entlang der die Wellentäler des Übergangsbereichs verlaufen. Hierdurch ergibt sich für das durchfließende Medium ein geringerer Durchflusswiderstand, verglichen mit einem sonst üblichen abrupteren Übergang. Gleichzeitig sorgt die innere trichterförmige Mantelfläche bei gleich bleibendem Außendurchmesser dafür, dass die Wellung im Übergangsbereich steifer ausfällt als im weiteren gewellten Leitungsabschnitt. Dies hat den vorteilhaften Effekt, dass der Ausgangspunkt für eine Biegung vom weiteren gewellten Leitungsabschnitt ausgeht und mehr oder weniger vom Übergangsbereich ferngehalten wird.

Soweit hier von Mantelfläche die Rede ist, so meint diese die imaginäre trichterförmige Ebene, auf der die Wellentäler liegen, wobei jedoch alle anderen Wellenbereiche einen größeren Durchmesser aufweisen.

Die erfindungsgemäßen biegbaren Leitungselemente haben natürlich auch einen weiteren Vorteil im Hinblick auf das geringere Transportvolumen, welches sie im Vergleich zu den üblichen gebogenen glattwandigen Kupferleitungen einnehmen. Denn die Leitungselemente können mit gerader Erstreckungsrichtung im nicht abgewinkelten Zustand transportiert werden, in dem sie sich natürlich einfacher und enger stapeln lassen. Anschließend ist dann ein nahezu beliebiges Abwinkeln und sogar Korrigieren der Biegung möglich.

Besonders vorteilhaft ist es darüber hinaus, wenn die Wellen des Übergangsbereichs zumindest teilweise flacher ausgebildet sind und/oder eine geringere Wellenhöhe aufweisen als die Wellen des weiteren Leitungsabschnitts. Hierdurch werden die positiven Aspekte des trichterförmigen Übergangsbereichs noch einmal verstärkt, indem der Übergangsbereich zum einen steifer ausfällt als der weitere gewellte Leitungsabschnitt und indem die Strömungsführung im Übergangsbereich verbessert und dadurch der Durchflusswiderstand verringert wird. In diesem Zusammenhang ist es ähnlich vorteilhaft, wenn die Wellen des Übergangsbereichs zumindest teilweise eine größere Wellenlänge aufweisen als die Wellen des weiteren Leitungsabschnittes.

Dadurch dass statt der üblichen Kupferrohre, die eine Wandstärke von ca. 1 mm aufweisen, nunmehr teilgewellte Leitungselemente verwendet werden, die vorteilhafterweise aus Edelstahl hergestellt sind, lässt sich die Wandstärke des Leitungselements (und zwar im gewellten wie im nicht gewellten Bereich) auf den Bereich zwischen etwa 0,15 mm und 0,3 mm reduzieren, was zu einer erheblichen Gewichtsreduzierung des Leitungselementes führt. Durch die dünnen Wandstärken ist es außerdem möglich, sowohl den Außendurchmesser als auch den lichten Innendurchmesser im gewellten Bereich in der Größenordnung zu belassen wie bei Kupferrohren, sodass sich hierdurch insgesamt keinerlei Nachteile im Hinblick auf Einbauraum und Strömungsverhältnisse ergeben.

Bei den genannten Edelstahlleitungselementen ist es - ebenso wie bei anderen Materialien - möglich, das gesamte Leitungselement einstückig herzustellen, sodass der glattwandige Leitungsabschnitt einstückig in den weiteren Leitungsabschnitt übergeht. Hierdurch wird sowohl die Herstellung des Leitungselements als auch dessen Belastbarkeit verbessert.

Was das Einbringen der Wellung in das insbesondere einstückige Leitungselement betrifft, so empfiehlt es sich, dass die Wellung des weiteren Leitungsabschnitts und insbesondere auch des Übergangsbereichs schraubengangförmig ausgebildet ist. Hierdurch ist eine kontinuierliche Einbringung der Wellung möglich, was den Herstellungsprozess entsprechend vereinfacht bzw. beschleunigt. Diese schraubengangförmige Wellung hat auch positive Effekte im Hinblick auf Strömungsführung und Strömungsverhalten des durch das Leitungselement zu transportierenden Mediums, in dem keine gewellten Bereiche vorhanden sind, die im Strömungsschatten liegen.

Das Leitungselement ist zwar schon dann vorteilhaft verwendbar, wenn es nur einen glattwandigen Leitungsabschnitt und einen weiteren gewellten Leitungsabschnitt aufweist; besonders vorteilhaft ist jedoch die Verwendung des erfindungsgemäßen Leitungselements dann, wenn zumindest zwei weitere gewellte Leitungsabschnitte vorhanden sind, die mit insgesamt zumindest drei glattwandigen Leitungsabschnitten kombiniert sind. Solche Leitungselemente mit größerer Anzahl werden vor allem dann benötigt, wenn die Abwinklungen des Leitungselementes in mehrere Richtungen erfolgen müssen, beispielsweise um sie entlang mehrerer Außenwände durch eine Gastherme zu verlegen. In diesem Fall erlauben die beiden gewellten Leitungsabschnitte eine weitaus einfachere Montage als bei den herkömmlichen gebogenen glattwandigen Kupferleitungen, da sie ein nachträgliches Anpassen der Leitungselemente an die Einbauverhältnisse und auch noch ein Korrigieren der Biegungen beim Einbauen ermöglichen und so Spannungen von den Anschlussverbindungen fernhalten.

Was diese Anschlussverbindungen betrifft, so empfiehlt es sich, wenn das Leitungselement an zumindest einem Ende ein zumindest in Teilbereichen radial aufgeweitetes Anschlussende aufweist, welches sich zweckmäßigerweise an den glattwandigen Leitungsabschnitt anschließt und aus einem in etwa ring- oder zylinderförmigen umlaufenden Bund besteht. An diesen Bund, der vor allem zur Beaufschlagung von beispielsweise aus Kunststoff bestehenden Anschlussteilen wie Anschlussmanschetten etc. dient, kann sich ein Bereich mit gegenüber dem Bund reduziertem Durchmesser anschließen, wobei entweder auf diesem Bereich oder an einem sonstigen Bereich auf der radialen Innen- oder Außenseite des Anschlussendes ein Sitz für einen Dichtungsring vorgesehen sein sollte.

Weitere Merkmale und Vorteile der vorliegenden Erfindung ergeben sich aus der nachfolgenden Beschreibung von Ausführungsbeispielen anhand der Zeichnungen; hierbei zeigen
- Figur 1: ein erfindungsgemäßes Leitungselement in teilweiser geschnittener Seitenansicht; und
- Figur 2: ein weiteres erfindungsgemäßes Leitungselement in abgewinkeltem Zustand in Seitenansicht mit beispielhaften Anschlussteilen in den Details a) bis e).

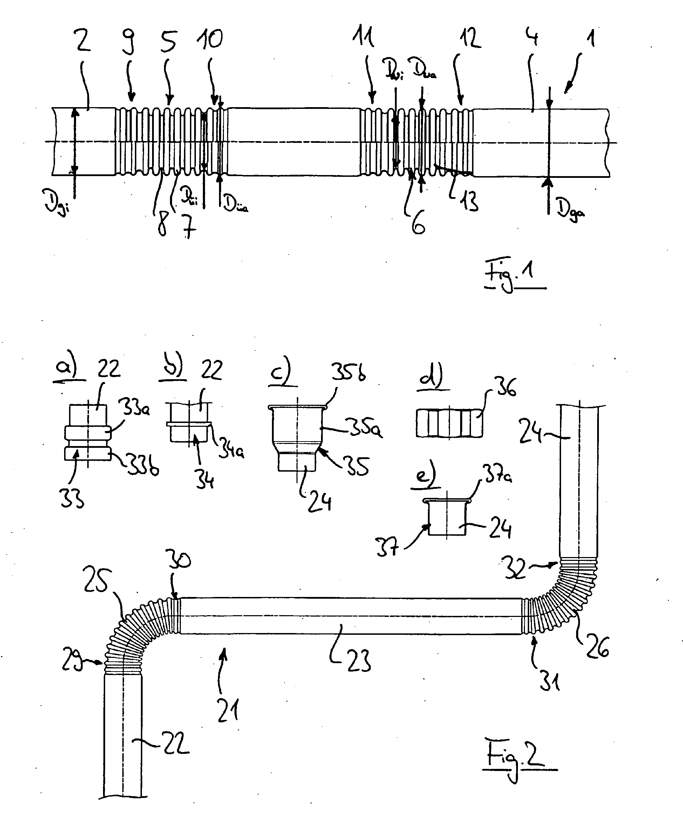

In Figur 1 ist das Leitungselement 1 teilweise geschnitten dargestellt, wobei die obere Bildhälfte die Außenansicht darstellt und die untere Bildhälfte einen Axialschnitt mit Innenansicht. Das Leitungselement 1 besteht aus insgesamt drei glattwandigen Leitungsabschnitten 2, 3, 4, die zylinderförmig ausgebildet sind, und aus zwei jeweils zwischen den glattwandigen Leitungsabschnitten angeordneten gewellten weiteren Leitungsabschnitten 5, 6.

In der Darstellung aus Figur 1 sind die Wellen der weiteren Leitungsabschnitte 5, 6 ringförmig ausgebildet und weisen radial außen liegende Wellenberge 7 und radial innen liegende Wellentäler 8 auf. Wie insbesondere aus dem Axialschnitt erkennbar ist, nimmt der Innendurchmesser der Wellen ausgehend von den glattwandigen Leitungsabschnitten 2, 3, 4 ab, was daran liegt, dass zwischen den glattwandigen Leitungsabschnitten und den gewellten weiteren Leitungsabschnitten 5, 6 jeweils Übergangsbereiche 9, 10, 11, 12 liegen. Diese Übergangsbereiche sind ebenfalls gewellt ausgeführt, wobei die Außendurchmesser D_{üa} der Wellenberge 7 der Übergangsbereiche in etwa dem Außendurchmesser D_{ga} der glattwandigen Leitungsabschnitte sowie dem Außendurchmesser D_{wa} der Wellenberge 7 der gewellten weiteren Leitungsabschnitte 5, 6 entsprechen. Hingegen ändert sich der Innendurchmesser D_{üi} der Wellentäler 8 im Übergangsbereich kontinuierlich ausgehend vom Innendurchmesser D_{gi} der glattwandigen Leitungsabschnitte 2, 3, 4 bis hin zum Innendurchmesser D_{wi} gewellten weiteren Leitungsabschnitte 5, 6, wobei diese Wellentäler 8 auf einer in etwa trichterförmigen Mantelfläche 13 liegen, die in Figur 1 im unteren Axialschnitt geschnitten angedeutet ist.

Diese trichterförmige Mantelfläche sorgt für einen vergleichmäßigten Strömungsübergang vom glattzylindrischen glattwandigen Leitungsabschnitt zum gewellten weiteren Leitungsabschnitt und umgekehrt und reduziert damit den Druckverlust entsprechend.

Figur 2 zeigt nun ein weiteres Leitungselement 21 in Seitenansicht, welches ebenfalls insgesamt drei glattwandige Leitungsabschnitte 22, 23, 24 aufweist sowie zwei jeweils zwischen den glattwandigen Leitungsabschnitten liegende gewellte weitere Leitungsabschnitte 25, 26 mit Übergangsbereichen 29, 30, 31, 32. Da die Wellung in den Übergangsbereichen verglichen mit der Wellung in den gewellten weiteren Leitungsabschnitten flacher ausgebildet ist und die Innendurchmesser der Wellentäler in den Übergangsbereichen noch größer als die Innendurchmesser der Wellentäler in den gewellten weiteren Leitungsabschnitten, erstreckt sich der Biegungsbereich vor allem über die gewellten weiteren Leitungsabschnitte 25, 26. Dies liegt daran, dass beim Biegen der Leitung zunächst die flexibleren gewellten Bereiche beansprucht werden und erst später dann die steiferen gewellten Übergangsbereiche.

In Figur 2 sind in den Detailansichten a) bis e) Anschlussteile 33, 34, 35, 36, 37 dargestellt, wobei die Anschlussteile 33, 34, 35, 37 einstückig an die glattwandigen Leitungsabschnitte 22, 24 angeformt sind und so deren Anschlussenden 33, 34, 35, 37 bilden. Diese Anschlussteile weisen radial aufgeweitete Bereiche auf in Form eines zylinderförmigen Bundes 33a, 33b, 35a bzw. eines ringförmigen Bundes 34a, 35b, 37a. Im Bereich dieser Anschlussenden werden in den Zeichnungen nicht dargestellte Dichtungsringe entweder auf der radialen Innen- oder Außenseite angeordnet, wobei diese Anschlussteile 33, 34, 35, 37 dazu dienen, mit separaten Anschlussmanschetten (die in der Zeichnung nicht dargestellt sind) oder mit einer Überwurfmutter 36 zusammenzuwirken.

Zusammenfassend bietet die vorliegende Erfindung den wesentlichen Vorteil, bei gleichem Einbauraum wie gebogene Kupferleitungen und nahezu gleichen Strömungsverhältnissen ein Ändern der Axialerstreckungsrichtung sowohl bei der Montage als auch nachträglich zu ermöglichen, ohne dass dies zu einem Beschädigen der Leitungen führt.

## Patentansprüche

1. Leitungselement für Heizungsanlagen zumindest bestehend aus einem glattwandigen Leitungsabschnitt (2, 3, 4, 22, 23, 24) und einem weiteren, zumindest teilweise gebogenen Leitungsabschnitt (5, 6, 25, 26) mit sich ändernder Axialerstreckungsrichtung,
wobei der weitere Leitungsabschnitt (5, 6, 25, 26) gewellt ausgebildet ist, der lichte Außendurchmesser (D_{wa}) des weiteren Leitungsabschnitts im Wesentlichen dem Außendurchmesser (D_{ga}) des glattwandigen Leitungsabschnitts (2, 3, 4, 22, 23, 24) entspricht,
das Leitungselement (1, 21) einen gewellten Übergangsbereich (9, 10, 11, 12, 29, 30, 31, 32) zwischen dem glattwandigen Leitungsabschnitt mit einem ersten Innendurchmesser (D_{gi}) und dem weiteren Leitungsabschnitt mit einem demgegenüber kleineren zweiten lichten Innendurchmesser (D_{wi}) aufweist, **dadurch gekennzeichnet,**
**dass** die radial innen liegenden Wellentäler (8) im Übergangsbereich (9, 10, 11, 12, 29, 30, 31, 32) auf einer in etwa trichterförmigen Mantelfläche (13) liegen.

2. Leitungselement nach Anspruch 1,
**dadurch gekennzeichnet,**
**dass** die Wellen des Übergangsbereichs (9, 10, 11, 12, 29, 30, 31, 32) zumindest teilweise flacher ausgebildet sind und/oder eine geringere Wellenhöhe aufweisen als die Wellen des weiteren Leitungsabschnittes (5, 6, 25, 26).

3. Leitungselement nach zumindest Anspruch 1,
**dadurch gekennzeichnet,**
**dass** die Wellen des Übergangsbereichs (9, 10, 11, 12, 29, 30, 31, 32) zumindest teilweise eine größere Wellenlänge aufweisen als die Wellen des weiteren Leitungsabschnittes (5, 6, 25, 26).

4. Leitungselement nach zumindest Anspruch 1,
**dadurch gekennzeichnet,**
**dass** die Wellen im Übergangsbereich (9, 10, 11, 12, 29, 30, 31, 32) steifer ausgebildet sind als die Wellen im weiteren Leitungsabschnitt (5, 6, 25, 26).

5. Leitungselement nach zumindest Anspruch 1,
**dadurch gekennzeichnet,**
**dass** der glattwandige Leitungsabschnitt (2, 3, 4, 22, 23, 24) und der weitere Leitungsabschnitt (5, 6, 25, 26) einstückig hergestellt sind.

6. Leitungselement nach zumindest Anspruch 1,
**dadurch gekennzeichnet,**
**dass** der weitere Leitungsabschnitt (5, 6, 25, 26) ring- oder schraubengangförmig gewellt ausgebildet ist.

7. Leitungselement nach zumindest Anspruch 1,
**dadurch gekennzeichnet,**
**dass** das Leitungselement (1, 21) aus Edelstahl besteht.

8. Leitungselement nach zumindest Anspruch 1,
**dadurch gekennzeichnet,**
**dass** das Leitungselement (1, 21) zumindest drei glattwandige Leitungsabschnitte (2, 3, 4, 22, 23, 24) und zumindest zwei weitere Leitungsabschnitte (5, 6, 25, 26) aufweist.

9. Leitungselement nach zumindest Anspruch 1,
**dadurch gekennzeichnet,**
**dass** das Leitungselement (1, 21) eine Wandstärke im Bereich zwischen 0,15 mm und 0,3 mm aufweist.

10. Leitungselement nach zumindest Anspruch 1,
**dadurch gekennzeichnet,**
**dass** das Leitungselement (1, 21) ein zumindest in Teilbereichen radial aufgeweitetes Anschlussende (33, 34, 35, 37) aufweist.

11. Leitungselement nach zumindest Anspruch 10,
**dadurch gekennzeichnet,**
**dass** sich das Anschlussende (33, 34, 35, 37) an den glattwandigen Leitungsabschnitt (22, 24) anschließt.

12. Leitungselement nach zumindest Anspruch 10,
**dadurch gekennzeichnet,**
**dass** der radial aufgeweitete Bereich (33a, 33b, 34a, 35a, 35b, 37a) des Anschlussendes (33, 34, 35, 37) aus einem in etwa ring- oder zylinderförmigen umlaufenden Bund besteht.

13. Leitungselement nach zumindest Anspruch 12,
**dadurch gekennzeichnet,**
**dass** sich an den Bund (33a, 34a) endständig ein Bereich mit gegenüber dem Bund reduziertem Durchmesser anschließt.

14. Leitungselement nach zumindest Anspruch 10,
**dadurch gekennzeichnet,**
**dass** das Anschlussende (33, 34, 35, 37) auf der radialen Innen- oder Außenseite einen Sitz für einen Dichtungsring aufweist.

## Claims

1. Pipe element for heating installations comprising at least one smooth-walled pipe section (2, 3, 22, 23, 24) and a further at least partially bent pipe section (5, 6, 25, 26) with varying axial direction, wherein the further pipe section (5, 6, 25, 26) is of corrugated construction, wherein the clear external diameter (D_{wa}) of the further pipe section corresponds substantially to the external diameter (D_{ga}) of the smooth-walled pipe section (2, 3, 4, 22, 23, 24), wherein the pipe element (1, 21) has a corrugated transition region (9, 10, 11, 12, 29, 30, 31, 32) between the smooth-walled pipe section with a first internal diameter (D_{gi}) and the further pipe section with a second clear internal diameter (D_{wi}) which is smaller than the first, **characterised in that** the radially inner corrugation troughs (8) in the transition region (9, 10, 11, 12, 29, 30, 31, 32) lie on an approximately funnel-shaped generated surface (13).

2. Pipe element as claimed in Claim 1, **characterised in that** the corrugations of the transition region (9, 10, 11, 12, 29, 30, 31, 32) are at least in part of flatter construction and/or have a smaller corrugation height than the corrugations of the further pipe section (5, 6, 25, 26).

3. Pipe element as claimed in at least Claim 1, **characterised in that** the corrugations of the transition region (9, 10, 11, 12, 29, 30, 31, 32) have at least in part a greater corrugation length than the corrugations of the further pipe section (5, 6, 25, 26).

4. Pipe element as claimed in at least Claim 1, **characterised in that** the corrugations in the transition region (9, 10, 11, 12, 29, 30, 31, 32) are of more rigid construction than the corrugations in the further pipe section (5, 6, 25, 26).

5. Pipe element as claimed in at least Claim 1, **characterised in that** the smooth-walled pipe section (2, 3, 4, 22, 23, 24) and the further pipe section (5, 6, 25, 26) are produced in one piece.

6. Pipe element as claimed in at least Claim 1, **characterised in that** the further pipe section (5, 6, 25, 26) is constructed with annular or helical corrugations.

7. Pipe element as claimed in at least Claim 1, **characterised in that** the pipe element (1, 21) is made from stainless steel.

8. Pipe element as claimed in at least Claim 1, **characterised in that** the pipe element (1, 21) has at least three smooth-walled pipe sections (2, 3, 4, 22, 23, 24) and at least two further pipe sections (5, 6, 25, 26).

9. Pipe element as claimed in at least Claim 1, **characterised in that** the pipe element (1, 21) has a wall thickness in the range between 0.15 mm and 0.3 mm.

10. Pipe element as claimed in at least Claim 1, **characterised in that** the pipe element (1, 21) has a connecting end (33, 34, 35, 37) which is enlarged radially at least in part-regions.

11. Pipe element as claimed in at least Claim 10, **characterised in that** the connecting end (33, 34, 35, 37) adjoins the smooth-walled pipe section (22, 24).

12. Pipe element as claimed in at least Claim 10, **characterised in that** the radially enlarged region (33a, 33b, 34a, 35a, 35b, 37a) of the connecting end (33, 34, 35, 37) comprises an approximately annular or cylindrical circumferential collar.

13. Pipe element as claimed in at least Claim 12, **characterised in that** a region with a diameter which is reduced relative to the collar adjoins the collar (33a, 34a) at the end.

14. Pipe element as claimed in at least Claim 10, **characterised in that** the connecting end (33, 34, 35, 37) has a seat for a sealing ring on the radially inner or outer face.

## Revendications

1. Élément de conduite pour des systèmes de chauffage, constitué au moins d'un tronçon de conduite (2, 3, 4, 22, 23, 24) à paroi lisse et d'un autre tronçon de conduite (5, 6, 25, 26) au moins partiellement courbe, dont la direction de développement axial se modifie,
sachant que l'autre tronçon de conduite (5, 6, 25, 26) est réalisé ondulé,
sachant que le diamètre extérieur de passage (D_{wa}) de l'autre tronçon de conduite correspond essentiellement au diamètre extérieur (D_{ga}) du tronçon de conduite (2, 3, 4, 22, 23, 24) à paroi lisse,
sachant que l'élément de conduite (1, 21) présente une région de transition ondulée (9, 10, 11, 12, 29, 30, 31, 32) entre le tronçon de conduite à paroi lisse ayant un premier diamètre intérieur (D_{gi}) et l'autre tronçon de conduite ayant un second diamètre intérieur (D_{wi}) plus petit que le premier,
**caractérisé en ce que** les creux d'ondulation (8) situés radialement à l'intérieur se situent, dans la région de transition (9, 10, 11, 12, 29, 30, 31, 32), sur une surface périphérique (13) approximativement en forme d'entonnoir.

2. Élément de conduite selon la revendication 1, **caractérisé en ce que** les ondulations de la région de transition (9, 10, 11, 12, 29, 30, 31, 32), au moins pour partie, sont réalisées plus plates et/ou présentent une plus petite hauteur d'ondulation que les ondulations de l'autre tronçon de conduite (5, 6, 25, 26).

3. Élément de conduite selon au moins la revendication 1, **caractérisé en ce que** les ondulations de la région de transition (9, 10, 11, 12, 29, 30, 31, 32), au moins pour partie, présentent une plus grande longueur d'ondulation que les ondulations de l'autre tronçon de conduite (5, 6, 25, 26).

4. Élément de conduite selon au moins la revendication 1, **caractérisé en ce que** les ondulations dans la région de transition (9, 10, 11, 12, 29, 30, 31, 32) sont réalisées à pente plus raide que les ondulations dans l'autre tronçon de conduite (5, 6, 25, 26).

5. Élément de conduite selon au moins la revendication 1, **caractérisé en ce que** le tronçon de conduite (2, 3, 4, 22, 23, 24) à paroi lisse et l'autre tronçon de conduite (5, 6, 25, 26) sont fabriqués d'un seul tenant.

6. Élément de conduite selon au moins la revendication 1, **caractérisé en ce que** l'autre tronçon de conduite (5, 6, 25, 26) est réalisé à ondulations annulaires ou hélicoïdales.

7. Élément de conduite selon au moins la revendication 1, **caractérisé en ce que** l'élément de conduite (1, 21) est réalisé en acier inoxydable.

8. Élément de conduite selon au moins la revendication 1, **caractérisé en ce que** l'élément de conduite (1, 21) présente au moins trois tronçons de conduite (2, 3, 4, 22, 23, 24) à paroi lisse et au moins deux autres tronçons de conduite (5, 6, 25, 26).

9. Élément de conduite selon au moins la revendication 1, **caractérisé en ce que** l'élément de conduite (1, 21) présente une épaisseur de paroi comprise entre 0,15 mm et 0,3 mm.

10. Élément de conduite selon au moins la revendication 1, **caractérisé en ce que** l'élément de conduite (1, 21) présente une extrémité de raccordement (33, 34, 35, 37) radialement élargie au moins dans des régions partielles.

11. Élément de conduite selon au moins la revendication 10, **caractérisé en ce que** l'extrémité de raccordement (33, 34, 35, 37) se raccorde au tronçon de conduite (22, 24) à paroi lisse.

12. Élément de conduite selon au moins la revendication 10, **caractérisé en ce que** la région radialement élargie (33a, 33b, 34a, 35a, 35b, 37a) de l'extrémité de raccordement (33, 34, 35, 37) est constituée d'un collet entourant approximativement annulaire ou cylindrique.

13. Élément de conduite selon au moins la revendication 12, **caractérisé en ce qu'**une région de diamètre réduit par rapport au collet se raccorde terminalement au collet (33a, 34a).

14. Élément de conduite selon au moins la revendication 10, **caractérisé en ce que** l'extrémité de raccordement (33, 34, 35, 37) présente sur le côté radial intérieur ou extérieur un siège pour une bague d'étanchéité.
